# EUROPEAN PATENT APPLICATION

(11) **EP 4 117 252 A1**
(43) Date of publication of application: **11.01.2023**
(21) Application number: 22182958.3
(22) Date of filing: 05.07.2022
(51) Int. Cl.: H04L 47/27, H04L 47/193, H04W 28/02

(54) **TRAFFIC CONTROL METHOD AND APPARATUS**

(30) Priority: 08.07.2021 CN 202110772818; 09.07.2021 CN 202110774805; 07.09.2021 CN 202111044378; 07.09.2021 CN 202111044369
(71) Applicant: Huawei Technologies Co., Ltd., Shenzhen, Guangdong 518129, (CN)
(72) Inventor: Shen, Xiaoman, Shenzhen, 518129 (CN); Zhang, Wei, Shenzhen, 518129 (CN); Zhou, Jun, Shenzhen, 518129 (CN); Tan, Hongyi, Shenzhen, 518129 (CN); Wu, Rihai, Shenzhen, 518129 (CN); Jiang, Xingfeng, Shenzhen, 518129 (CN)
(74) Representative: Thun, Clemens

(57) **Abstract**

A traffic control method and apparatus are provided, and belong to the field of communications technologies. The method includes: An access point decreases a value of a receive window (receive window, RWND) field in a transmission control protocol (transmission control protocol, TCP) packet sent to a target station, to obtain a modified TCP packet; and the access point sends a downlink frame including the modified TCP packet to the target station. The TCP packet belongs to a non-key service. In this application, the access point decreases a value of an RWND field in a downlink TCP packet that is of the non-key service and sent to the target station, to control uplink traffic of the non-key service. This helps improve quality of service (quality of service, QoS) of a key service of the access point.

## Description

### TECHNICAL FIELD

This application relates to the field of communications technologies, and in particular, to a traffic control method and apparatus.

### BACKGROUND TECHNOLOGY

A wireless local area network (wireless local area network, WLAN) includes an access point (access point, AP) and a station (station, STA). The AP is configured to provide a network access service for the STA associated with the AP. The AP communicates with the STA through an air interface. With the increase of network traffic, traffic bursts increase sharply. As a result, air interface congestion may occur on the AP, affecting QoS of a key service. How to improve the QoS of the key service is an urgent problem to be resolved.

### SUMMARY

This application provides a traffic control method and apparatus. Technical solutions of this application are as follows.

According to a first aspect, a traffic control method is provided, where the method includes: An access point receives a first TCP packet sent to a target station, where the first TCP packet belongs to a non-key service, and the target station is associated with the access point; the access point decreases a value of an RWND field in the first TCP packet to obtain a modified first TCP packet; and the access point sends a first downlink frame to the target station, where the first downlink frame includes the modified first TCP packet.

A value of an RWND field in a TCP packet represents a volume of traffic (for example, a quantity of packets or a volume of data) that can be received by a transmit end of the TCP packet. A receive end of the TCP packet usually sends, to the transmit end of the TCP packet based on the value of the RWND field in the received TCP packet, traffic of a service to which the TCP packet belongs.

In the technical solutions provided in this application, the first TCP packet is a downlink TCP packet, and the access point decreases the value of the RWND field in the first TCP packet that is sent to the target station. After receiving the modified first TCP packet, the target station may send, to the transmit end of the first TCP packet based on a value of an RWND field in the modified first TCP packet, uplink traffic of the non-key service to which the first TCP packet belongs. Usually, a volume of the uplink traffic that is of the non-key service and sent by the target station is not greater than a traffic volume represented by the value of the RWND field in the modified first TCP packet. Therefore, the uplink traffic of the non-key service to which the first TCP packet belongs is controlled. This helps to improve QoS of a key service of the access point.

Optionally, the first TCP packet is a TCP data packet or a TCP acknowledgment (acknowledge, ACK) packet. In this application, both the TCP data packet and the TCP ACK packet are referred to as TCP packets. In this application, an example in which the first TCP packet is a TCP ACK packet is used for description. The first TCP packet may be a downlink TCP ACK packet.

In a possible case, the access point is capable of identifying a TCP ACK packet. After identifying that the first TCP packet is a downlink TCP ACK packet of the non-key service, the access point decreases the value of the RWND field in the first TCP packet. In another possible case, the access point is incapable of identifying a TCP ACK packet. In this case, the access point cannot identify that the first TCP packet is a TCP ACK packet. The access point decreases a value of an RWND field in a downlink TCP packet (including a TCP data packet and a TCP ACK packet) that is of the non-key service and forwarded by the access point. In this way, the value of the RWND field in the downlink TCP ACK packet of the non-key service is decreased, to decrease the value of the RWND field in the first TCP packet.

Optionally, that the access point decreases a value of an RWND field in the first TCP packet includes: The access point decreases the value of the RWND field in the first TCP packet when traffic of the non-key service needs to be decreased.

According to the technical solutions provided in this application, when the traffic of the non-key service to which the first TCP packet belongs needs to be decreased, the access point decreases the value of the RWND field in the first TCP packet, to control, as required, the uplink traffic of the non-key service to which the first TCP packet belongs. This helps to improve the QoS of the key service of the access point.

Optionally, that the access point decreases the value of the RWND field in the first TCP packet when traffic of the non-key service needs to be decreased includes: When utilization of an operating channel of the access point is greater than a target threshold and the key service of the access point is affected, the access point decreases the value of the RWND field in the first TCP packet.

For example, when the utilization of the operating channel of the access point is greater than the target threshold and the key service of the access point is affected, if the access point determines that the traffic of the non-key service to which the first TCP packet belongs needs to be decreased, the access point decreases the value of the RWND field in the first TCP packet. To be specific, a trigger condition for the access point to decrease the traffic of the non-key service to which the first TCP packet belongs includes: The utilization of the operating channel of the access point is greater than the target threshold, and the key service of the access point is affected.

According to the technical solutions provided in this application, if the utilization of the operating channel of the access point is greater than the target threshold and the key service of the access point is affected, it is considered that air interface congestion occurs on the access point. When air interface congestion occurs on the access point, the access point decreases the value of the RWND field in the first TCP packet, to control the uplink traffic of the non-key service to which the first TCP packet belongs. This can better relieve air interface congestion on the access point, and improve the QoS of the key service of the access point.

Optionally, that the access point decreases the value of the RWND field in the first TCP packet when traffic of the non-key service needs to be decreased includes: When the access point receives an indication used to perform traffic control on the non-key service, the access point decreases the value of the RWND field in the first TCP packet.

For example, when the access point receives the indication used to perform traffic control on the non-key service, if the access point determines that the traffic of the non-key service to which the first TCP packet belongs needs to be decreased, the access point decreases the value of the RWND field in the first TCP packet. To be specific, a trigger condition for the access point to decrease the traffic of the non-key service to which the first TCP packet belongs includes: The access point receives the indication used to perform traffic control on the non-key service.

According to the technical solutions provided in this application, when receiving the indication used to perform traffic control on the non-key service, the access point decreases the value of the RWND field in the first TCP packet, to control the uplink traffic of the non-key service. This can not only relieve air interface congestion on the access point, reduce load of a device that sends the indication, improve QoS of a service (for example, a key service) of the device that sends the indication, but also implement collaborative work between the access point and the device.

Optionally, the indication used to perform traffic control on the non-key service is from an intra-frequency neighboring access point of the access point. In this way, load of the intra-frequency neighboring access point of the access point can be reduced, QoS of a service of the intra-frequency neighboring access point of the access point can be improved, and collaborative work between the access point and the intra-frequency neighboring access point of the access point can be implemented.

Optionally, after the access point sends the first downlink frame to the target station, the method further includes: The access point receives a second TCP packet sent to the target station, where the second TCP packet belongs to the non-key service; when a received throughput of the access point for the non-key service is less than a target throughput, the access point decreases a value of an RWND field in the second TCP packet to obtain a modified second TCP packet, where a value of an RWND field in the modified second TCP packet is less than the value of the RWND field in the second TCP packet before modification and greater than the value of the RWND field in the modified first TCP packet; and the access point sends a second downlink frame to the target station, where the second downlink frame includes the modified second TCP packet.

The second TCP packet and the first TCP packet belong to a same TCP flow. Because the value of the RWND field in the modified second TCP packet is less than the value of the RWND field in the second TCP packet before modification and is greater than the value of the RWND field in the modified first TCP packet, that the access point decreases a value of an RWND field in the second TCP packet may be considered as that the access point increases the value of the RWND field in the second TCP packet based on the value of the RWND field in the modified first TCP packet. Compared with the modified first TCP packet, the modified second TCP packet may enable the target station to send the uplink traffic of the non-key service by using a larger window.

According to the technical solutions provided in this application, when the received throughput of the access point for the non-key service is less than the target throughput, the access point decreases the value of the RWND field in the second TCP packet that is of the non-key service and sent to the target station, so that the value of the RWND field in the modified second TCP packet is less than the value of the RWND field in the second TCP packet before modification and greater than the value of the RWND field in the modified first TCP packet. Therefore, the access point may implement dynamic control over the uplink traffic of the non-key service, and may stabilize the received throughput of the non-key service at a specified level while improving the QoS of the key service of the access point, to avoid excessive suppression on the non-key service, so as to ensure the throughput of the access point for the non-key service as much as possible.

Optionally, the second TCP packet is a TCP data packet or a TCP ACK packet. In this application, an example in which the second TCP packet is a TCP ACK packet is used for description. The second TCP packet may be a downlink TCP ACK packet.

Optionally, after the access point sends the first downlink frame to the target station, the method further includes: The access point receives a third TCP packet sent to the target station, where the third TCP packet belongs to the non-key service; when a received throughput of the access point for the non-key service is greater than a target throughput, the access point decreases a value of an RWND field in the third TCP packet to obtain a modified third TCP packet, where a value of an RWND field in the modified third TCP packet is less than the value of the RWND field in the third TCP packet before modification and less than the value of the RWND field in the modified first TCP packet; and the access point sends a third downlink frame to the target station, where the third downlink frame includes the modified third TCP packet.

The third TCP packet and the first TCP packet belong to a same TCP flow. The value of the RWND field in the modified third TCP packet is less than the value of the RWND field in the third TCP packet before modification and less than the value of the RWND field in the modified first TCP packet, the value of the RWND field in the third TCP packet before modification is set by a transmit end of the third TCP packet in the third TCP packet, and the value of the RWND field in the third TCP packet before modification is usually large. Therefore, the access point may decrease the value of the RWND field in the third TCP packet based on the value of the RWND field in the modified first TCP packet. Compared with the modified first TCP packet, the modified third TCP packet may enable the target station to send the uplink traffic of the non-key service by using a smaller window.

According to the technical solutions provided in this application, when the received throughput of the access point for the non-key service is greater than the target throughput, the access point decreases the value of the RWND field in the third TCP packet that is of the non-key service and sent to the target station, so that the value of the RWND field in the modified third TCP packet is less than the value of the RWND field in the third TCP packet before modification and less than the value of the RWND field in the modified first TCP packet. Therefore, the access point may implement dynamic control over the uplink traffic of the non-key service, and may stabilize the received throughput of the non-key service at a specified level while improving the QoS of the key service of the access point, to avoid excessive suppression on the non-key service, so as to ensure the throughput of the access point for the non-key service as much as possible.

Optionally, the third TCP packet is a TCP data packet or a TCP ACK packet. In this application, an example in which the third TCP packet is a TCP ACK packet is used for description. The third TCP packet may be a downlink TCP ACK packet.

Optionally, the traffic of the non-key service is greater than the target threshold. That is, the non-key service may be a large-traffic service. The large-traffic service refers to a service with relatively large traffic, and is usually a service with continuous incoming packets or a burst incoming packet.

According to a second aspect, a traffic control apparatus is provided, including modules configured to perform the method provided in any one of the first aspect or the optional manners of the first aspect. The modules may be implemented based on software, hardware, or a combination of software and hardware, and may be randomly combined or divided based on a specific implementation.

According to a third aspect, a traffic control apparatus is provided, including a processor, a memory, and a transceiver.

The transceiver is configured to perform a sending and receiving action in the method provided in any one of the first aspect or the optional manners of the first aspect.

The memory is configured to store a computer program.

The processor is configured to execute the computer program stored in the memory, to perform a processing action in the method provided in any one of the first aspect or the optional manners of the first aspect.

According to a fourth aspect, a computer-readable storage medium is provided. The computer-readable storage medium stores a computer program. When the computer program is executed, the method provided in any one of the first aspect or the optional manners of the first aspect is implemented.

According to a fifth aspect, a computer program product is provided, including a program or code. When the program or the code is executed, the method provided in any one of the first aspect or the optional manners of the first aspect is implemented.

According to a sixth aspect, a chip is provided, including a programmable logic circuit and/or program instructions. When the chip is running, the chip is configured to implement the method according to any one of the first aspect or the optional manners of the first aspect.

According to a seventh aspect, a traffic control system is provided, including an access point and a target station associated with the access point. The access point is configured to perform the method provided in any one of the first aspect or the optional manners of the first aspect.

Optionally, the access point includes the traffic control apparatus provided in the second aspect or the third aspect.

Optionally, the traffic control system includes at least two access points, the at least two access points are neighbors to each other, operating channels of the at least two access points overlap, and any one of the at least two access points may indicate the other access point to perform traffic control on a non-key service.

Optionally, the at least two access points include a first access point and a second access point, and that the at least two access points are neighbors to each other includes: A distance between the first access point and the second access point is less than a distance threshold.

Optionally, the at least two access points include a first access point and a second access point, and that operating channels of the at least two access points overlap includes: At least one sub-channel of the operating channel of the first access point is the same as at least one sub-channel of the operating channel of the second access point. For example, the operating channel of the first access point is completely the same as the operating channel of the second access point, or a part of the operating channel of the first access point is the same as a part of the operating channel of the second access point.

The technical solutions provided in this application bring the following beneficial effects.

According to the traffic control method and apparatus provided in this application, after receiving the TCP packet that is of the non-key service and sent to the target station, the access point decreases the value of the RWND field in the TCP packet to obtain a modified TCP packet, and sends a downlink frame including the modified TCP packet to the target station. The value of the RWND field in the TCP packet represents the volume of the traffic that can be received by the transmit end of the TCP packet. After receiving the modified TCP packet, the target station may send, to the transmit end of the TCP packet based on the value of the RWND field in the modified TCP packet, the uplink traffic of the non-key service to which the TCP packet belongs. In addition, the uplink traffic that is of the non-key service and sent by the target station to the transmit end of the TCP packet is forwarded by the access point to the transmit end of the TCP packet. Because the access point decreases the value of the RWND field in the downlink TCP packet that is of the non-key service and sent to the target station, the target station decreases the uplink traffic of the non-key service, to control the uplink traffic of the non-key service. This helps improve the QoS of the key service of the access point.

### BRIEF DESCRIPTION OF DRAWINGS

FIG. 1 is a schematic diagram of a structure of a communications system according to an embodiment of this application;
FIG. 2 is a flowchart of a traffic control method according to an embodiment of this application;
FIG. 3 is a flowchart of another traffic control method according to an embodiment of this application;
FIG. 4 is a flowchart of still another traffic control method according to an embodiment of this application;
FIG. 5 is a schematic diagram of a structure of a traffic control apparatus according to an embodiment of this application;
FIG. 6 is a schematic diagram of a structure of another traffic control apparatus according to an embodiment of this application; and
FIG. 7 is a schematic diagram of a structure of still another traffic control apparatus according to an embodiment of this application.

### DESCRIPTION OF EMBODIMENTS

The following further describes in detail implementations of this application with reference to the accompanying drawings.

In a wireless network (for example, a WLAN), with the increase of network devices and emergence of emerging services such as video conferencing and cloud backup, network traffic increases, traffic bursts sharply increase, and load of an AP increases. This easily causes air interface congestion on the AP.

In addition, due to a limitation of radio spectrum resources, APs that are close to each other inevitably need to be deployed on a same frequency band (APs that are close to each other are neighbors to each other, and APs that are close to each other and deployed on a same frequency band are intra-frequency neighbors to each other). The neighboring APs deployed on the same frequency band share air interface resources. Therefore, if air interface congestion occurs on one AP, air interface congestion also occurs on an intra-frequency neighboring AP.

Air interface congestion may cause problems such as packet loss, increased transmission delay, and decreased throughput on the wireless network, affects QoS of a key service, and even affects the key service. Therefore, how to improve the QoS of the key service is an urgent problem to be resolved when the network traffic increases and the traffic bursts sharply increase.

Embodiments of this application provide a traffic control method and apparatus. An AP performs flow control on a non-key service by decreasing a value of an RWND field in a TCP packet that is of the non-key service and sent to a target STA. This helps improve QoS of a key service of the access point. For example, the AP decreases a value of an RWND field in a downlink TCP packet that is of the non-key service and sent to the target STA, to control uplink traffic of the non-key service. This may improve the QoS of the key service of the access point more effectively. Especially when network traffic increases or traffic bursts sharply increase, the QoS of the key service can be improved.

The following describes the technical solutions in embodiments of this application. First, an implementation environment of embodiments of this application is described.

The technical solutions provided in embodiments of this application may be applied to any TCP-based communications system (or referred to as a communications network), for example, applied to the following communications systems based on a TCP protocol: an Internet of things (Internet of things, IoT) system, a WLAN system, a long term evolution (long term evolution, LTE) system, a 5th generation mobile communications (5th generation mobile networks or 5th generation wireless systems, 5G) new radio (new radio, NR) system, or a communications system after 5G, for example, a 6G system, a device to device (device to device, D2D) communications system, or an Internet of vehicles system.

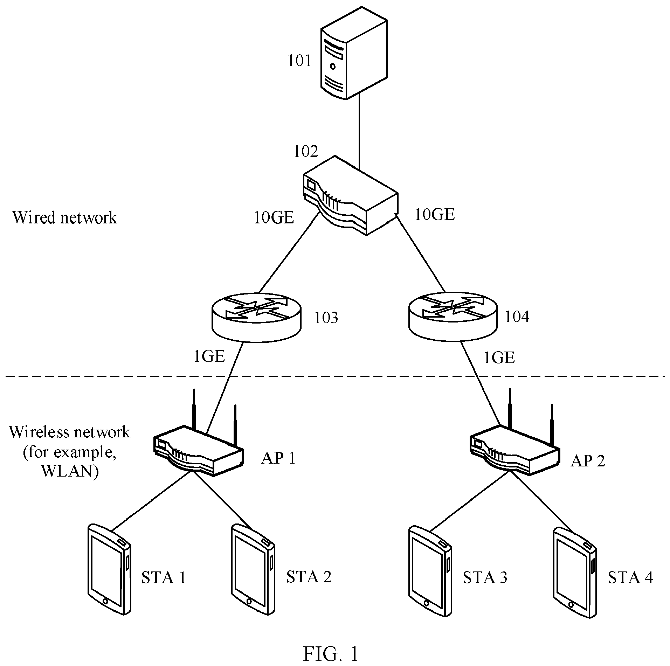

A specific application scenario of the technical solutions provided in embodiments of this application is not limited. For example, the technical solutions provided in embodiments of this application may be applied to a communications system shown in FIG. 1. The communications system shown in FIG. 1 may be an enterprise campus network or a data center (data center, DC) network. This is not limited in this embodiment of this application.

As shown in FIG. 1, the communications system includes a server 101, network devices 102 to 104, an AP 1, an AP 2, and a STA 1 to a STA 4. The server 101 and the network devices 102 to 104 are all deployed in a wired network. The AP 1, the AP 2, and the STA 1 to the STA 4 are all deployed in a wireless network (for example, a WLAN). The AP 1 and the AP 2 provide a bridging function between the wireless network and the wired network.

The network device 102 may be an aggregation switch, and both the network device 103 and the network device 104 may be access switches. The server 101 is connected to the network device 102. The network device 102 is connected to the network device 103 and the network device 104. The network device 103 is connected to the AP 1. The network device 104 is connected to the AP 2. A connection between the server 101 and the network device 102 is a direct connection or an indirect connection. For example, the server 101 is connected to the network device 102 by using a core switch (not shown in FIG. 1). In this embodiment of this application, a direction from the server to the STA is defined as a downlink direction, and a direction from the STA to the server is defined as an uplink direction. As shown in Figure 1, a downlink port used by the aggregation switch to communicate with the access switch is a 10GE port, and a downlink port used by the access switch to communicate with the APs (AP 1 and AP 2) is a 1GE port.

As shown in FIG. 1, the STA 1 and the STA 2 each are associated with the AP 1, and the STA 3 and the STA 4 each are associated with the AP 2. On the WLAN network, an AP communicates with a STA associated with the AP through an air interface and shares air interface resources with the STA associated with the AP. Therefore, the AP 1 communicates with the STA 1 and the STA 2 through an air interface and shares air interface resources with the STA 1 and the STA 2. The AP 2 communicates with the STA 3 and the STA 4 through an air interface and shares air interface resources with the STA 3 and the STA 4. The AP 1 and the AP 2 are deployed on a same frequency band and share air interface resources. That is, the AP 1 and the AP 2 and the STA 1 to the STA 4 share the air interface resources.

In this embodiment of this application, that a plurality of APs are deployed on a same frequency band means that operating channels of the plurality of APs overlap. The operating channel of the AP may include at least one sub-channel. That the operating channels of the plurality of APs overlap includes: The operating channels of the plurality of APs have at least one same sub-channel. That is, all of the operating channels of the plurality of APs are the same; or some of the operating channels of the plurality of APs are the same. For example, both an operating channel of the AP 1 and an operating channel of the AP 2 are a channel <36, 40>. The channel <36, 40> is a channel with a bandwidth of 40 MHz, and includes two channels with a bandwidth of 20 MHz: a channel 36 and a channel 40. The two channels with a bandwidth of 20 MHz, the channel 36 and the channel 40, are sub-channels of the channel <36, 40> with a bandwidth of 40 MHz. The operating channel of the AP 1 and the operating channel of the AP 2 overlap, and are completely the same. For another example, the operating channel of the AP 1 is a channel <32, 36>, and the operating channel of the AP 2 is the channel <36, 40>. The operating channel of the AP 1 and the operating channel of the AP 2 overlap, and are partially the same. For another example, the operating channel of the AP 1 is the channel <36, 40>, and the operating channel of the AP 2 is a channel <36, 40, 44, 48>. The operating channel of the AP 1 and the operating channel of the AP 2 overlap, and are partially the same. In addition, APs that are close to each other are neighbors to each other. For two APs that are close to each other, one AP may be referred to as a neighboring AP of the other AP. If two APs are deployed on a same frequency band and are neighbors to each other, one AP may be referred to as an intra-frequency neighboring AP of the other AP.

The AP may be a switch, a router, a virtual switch, a virtual router, or the like. The AP is used in a broadband home, inside a building, inside a campus, or the like. A signal of the AP may cover a range of tens of meters to hundreds of meters. The STA may be a desktop device, a laptop device, a handheld device, a wearable device, a smart home device, a computing device, a vehicle-mounted device, or the like that has a wireless connection function. For example, the STA may be a mobile phone, a netbook, a notebook computer, a tablet computer, a smartwatch, a supercomputer, an ultra-mobile personal computer (ultra-mobile personal computer, UMPC), a smart camera, a personal digital assistant (personal digital assistant, PDA), a portable multimedia player (portable multimedia player, PMP), an augmented reality (augmented reality, AR) device, a virtual reality (virtual reality, VR) device, a wireless device on an airplane, a wireless device on a robot, a wireless device in industrial control, a wireless device in telemedicine, a wireless device in a smart grid, a wireless device and the like in a smart city (smart city), a wireless device in a narrow band (narrow band, NB) system, or a wireless device in an IoT system, for example, a sensor or a camera. Alternatively, the STA may be an industrial manufacturing automatic optical inspection (automatic optical inspection, AOI) device or the like. The access switch is used to connect the AP to the wired network. A part of the wired network oriented to a user connection or network access is referred to as an access layer. The access switch is usually directly connected to a terminal device, for example, a computer. Therefore, the access switch has low costs and high port density. The aggregation switch is an aggregation point of a plurality of access switches, can process all traffic from an access-layer device (for example, an access switch), and can provide an uplink to a core device (for example, a core switch). Therefore, compared with the access switch, the aggregation switch has higher performance, fewer interfaces, and a higher switching rate. On an enterprise campus network, an aggregation switch is usually deployed between buildings and functions as a local or important transit station. The core switch is used to provide high-speed transmission and optimization for an aggregation-layer device (for example, an aggregation switch), and is equivalent to an egress or a general aggregation. The core switch bears and aggregates all transmission traffic. Therefore, the core switch usually has high reliability and a high throughput. For example, a layer 2 or layer 3 switch with a high throughput can be used as a core switch. The server includes, for example, a server cluster in an enterprise campus, for example, a DC, an equipment room, or a private cloud. The server is used to provide a remote service (for example, a computing service, a storage service, and a network service) for the STA.

It should be noted that the communications system shown in FIG. 1 is used only as an example, and is not intended to limit the technical solutions of this application. In an implementation process, a quantity of servers, a quantity of switches at each layer, a quantity of APs, a quantity of STAs, and a networking architecture formed by these devices may be configured based on a requirement. In addition, another device or network may be further configured in the communications system. For example, a controller, an egress router, an operator network, a dedicated network, or a public cloud is configured in the communications system. In addition, the AP may be any device, other than the foregoing listed devices, that provides a network access service for the STA, and the STA may be any wireless device that has a wireless network access function other than the foregoing listed devices. For example, the STA may be any device that has a WLAN connection function.

In this embodiment of this application, a direction from the server to the STA is a downlink direction, and a direction from the STA to the server is defined as an uplink direction. A transmit end of uplink traffic is a STA, and a receive end of the uplink traffic may be a server. A transmit end of downlink traffic may be a server, and a receive end of the downlink traffic is a STA. The communications system shown in FIG. 1 is used as an example. For a service A (for example, an uplink service), a transmission process of uplink traffic of the service A includes: The STA (for example, the STA 1) sends a TCP data packet of the service A to the server 101. The TCP data packet arrives at the server 101 after being successively forwarded by the AP 1, the network device 103, and the network device 102. Correspondingly, a transmission process of downlink traffic of the service A includes: The server 101 sends a TCP ACK packet of the service A to the STA 1. The TCP ACK packet arrives at the STA 1 after being sequentially forwarded by the network device 102, the network device 103, and the AP 1. For a service B (for example, a downlink service B), a transmission process of downlink traffic of the service B includes: The server 101 sends a TCP data packet of the service B to the STA (for example, the STA 1). The TCP data packet arrives at the STA 1 after being sequentially forwarded by the network device 102, the network device 103, and the AP 1. Correspondingly, a transmission process of uplink traffic of the service B is as follows: The STA 1 sends a TCP ACK packet of the service B to the server 101. The TCP ACK packet arrives at the server 101 after being successively forwarded by the AP 1, the network device 103, and the network device 102. The TCP ACK packet corresponds to the TCP data packet, and the TCP ACK packet and the TCP data packet corresponding to the TCP ACK packet belong to a same TCP flow. A difference between the TCP ACK packet and the TCP data packet corresponding to the TCP ACK packet is that a packet direction of the TCP data packet is opposite to a packet direction of the corresponding TCP ACK packet.

It can be learned from the foregoing description that the AP plays an important role in a transmission process of service traffic (including uplink traffic and downlink traffic). If air interface congestion occurs on the AP, a key service (a service of the AP, for example, a service that needs to be forwarded by the AP) of the AP may be affected, and QoS of the key service of the AP cannot be ensured. In addition, compared with the downlink traffic, the uplink traffic has a many-to-one feature (for example, a plurality of STAs transmit the uplink traffic to a same server, and the uplink traffic is forwarded by a same AP). Therefore, the uplink traffic has a relatively large contention for air interface resources, and has a greater impact on the key service. Especially, an uplink large-traffic service has a more obvious impact on the key service. The large-traffic service is a service with relatively large traffic, and is usually a service with continuous incoming packets or a burst incoming packet, for example, a service with traffic larger than a target threshold.

For ease of description, both the TCP data packet and the TCP ACK packet are referred to as TCP packets in this application. A value of an RWND field in a TCP packet represents a volume of traffic that can be received by a transmit end (for example, a server) of the TCP packet. A receive end (for example, a STA) of the TCP packet usually sends, to the transmit end of the TCP packet based on the value of the RWND field in the TCP packet, traffic of a service to which the TCP packet belongs. In view of this, in a process of forwarding the TCP packet, the AP may modify the value of the RWND field in the TCP packet, to implement traffic adjustment on the service to which the TCP packet belongs. For example, the AP decreases a value of an RWND field in a TCP packet of a non-key service to suppress the non-key service. That is, the QoS of the key service of the AP is improved. Optionally, the AP decreases a value of an RWND field in a downlink TCP ACK packet of the non-key service, to control uplink traffic of the non-key service, so as to better improve the QoS of the key service of the AP.

Downlink traffic of the non-key service is sent from the AP to the terminal. The AP can directly decrease the traffic sent to the terminal to control the downlink traffic of the non-key service. However, the uplink traffic of the non-key service is sent by a terminal, and the AP cannot directly control packet traffic sent by the terminal. In this embodiment of this application, when the AP needs to perform traffic control on the non-key service, the AP decreases the value of the RWND field in the TCP packet of the non-key service, to perform traffic control on the non-key service. The AP may decrease the value of the RWND field in the downlink TCP packet of the non-key service, to control the uplink traffic of the non-key service.

In this application, the AP decreases the value of the RWND field in the downlink TCP packet of the non-key service, to control the uplink traffic of the non-key service. The downlink TCP packet includes a TCP data packet and a TCP ACK packet, and the AP may decrease a value of an RWND field in a downlink TCP ACK packet of the non-key service, to control the uplink traffic of the non-key service.

In a possible case, the AP is capable of identifying a TCP ACK packet. After identifying the downlink TCP ACK packet of the non-key service, the AP decreases the value of the RWND field in the TCP ACK packet. In another possible case, the AP is incapable of identifying a TCP ACK packet. The AP decreases the value of the RWND field in the downlink TCP packet (including the TCP data packet and the TCP ACK packet) that is of the non-key service and forwarded by the AP, to decrease the value of the RWND field in the downlink TCP ACK packet of the non-key service.

In this application, whether a service is a key service may be determined based on access categories (access categories, AC). For example, the access category includes voice (voice, VO), video (video, VI), best effort (best effort, BE), and background (background, BK). The key service is a service whose QoS needs to be preferably guaranteed, for example, a VO service (that is, a service whose access category is VO) or a VI service (that is, a service whose access category is VI), and the non-key service is correspondingly a BK service (that is, a service whose access category is BK) or a BE service (a service whose access category is BE) that has a low QoS requirement. In this application, distinguishing between the key service and the non-key service based on the access categories is merely an example. In some embodiments, the key service and the non-key service may be distinguished based on an application type. For example, the application type includes live broadcast, video, voice, backup, and the like, the key service is, for example, a live broadcast service, a video service, or a voice service, and the non-key service is correspondingly a backup service.

The following describes method embodiments of this application. The method embodiments of this application are applied to the AP. In a process of forwarding a downlink TCP packet, the AP decreases the value of the RWND field in the downlink TCP packet of the non-key service, to the control uplink traffic of the non-key service. The AP may be the AP 1 or the AP 2 in FIG. 1. For ease of description, the following method embodiment is described by using an example in which the traffic control method is applied to the AP 1. For a traffic control method applied to the AP 2, refer to the following embodiment.

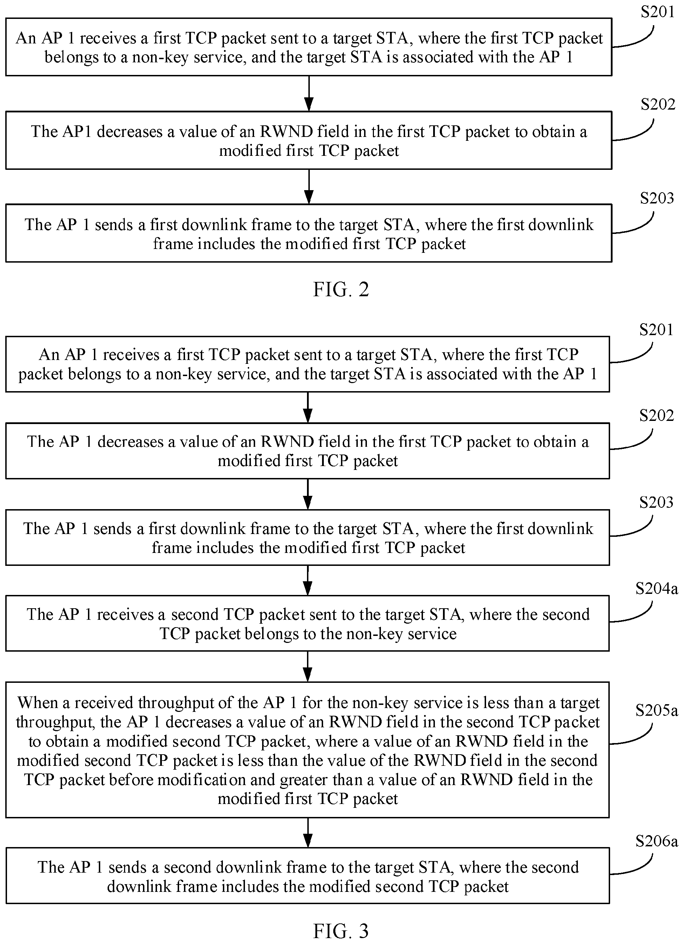

FIG. 2 is a flowchart of a traffic control method according to an embodiment of this application. As shown in FIG. 2, the traffic control method includes the following S201 to S203.

S201: The AP 1 receives a first TCP packet sent to a target STA, where the first TCP packet belongs to a non-key service, and the target STA is associated with the AP 1.

The target STA is any STA associated with the AP 1. For example, the target STA is the STA 1 or the STA 2 in FIG. 1.

The non-key service is a service that has a low QoS requirement. For example, based on access categories, the non-key service may be a BE service or BK service. Traffic of the non-key service to which the first TCP packet belongs is greater than a target threshold. That is, the traffic of the non-key service is large, and the non-key service is a large-traffic service. For example, the non-key service to which the first TCP packet belongs is a large-traffic BE service or BK service.

The AP 1 may receive, from a previous hop of the AP 1 on a transmission path of the first TCP packet, the first TCP packet sent to the target STA. The first TCP packet may be a TCP data packet or a TCP ACK packet, and may be a downlink TCP packet. An example in which the first TCP packet is a downlink TCP ACK packet is used for description. For example, as shown in FIG. 1, a direction from the server to the STA is a downlink direction. The first TCP packet may be a TCP ACK packet (that is, a downlink TCP ACK packet) sent from the server 101 to the STA 1, and the AP 1 receives the first TCP packet from the network device 103.

S202: The AP 1 decreases a value of an RWND field in the first TCP packet to obtain a modified first TCP packet.

A value of an RWND field in a TCP packet represents a volume of traffic that can be received by a transmit end of the TCP packet, and the volume of traffic may be a quantity of packets or a volume of data. The larger value of the RWND field in the TCP packet indicates the higher traffic that can be received by the transmit end of the TCP packet, and the receive end of the TCP packet may send, to the transmit end of the TCP packet by using a larger window, traffic of a service to which the TCP packet belongs. The smaller value of the RWND field in the TCP packet indicates the lower traffic that can be received by the transmit end of the TCP packet, and the receive end of the TCP packet needs to send, to the transmit end of the TCP packet by using a smaller window, traffic of the service to which the TCP packet belongs.

In this embodiment of this application, the first TCP packet sent to the target STA is a downlink TCP packet. After receiving the first TCP packet, the AP 1 decreases the value of the RWND field in the first TCP packet, so that traffic represented by the value of the RWND field in the first TCP packet is decreased. In this way, after receiving the first TCP packet (which refers to the modified first TCP packet), the target STA performs the following operations based on a value of an RWND field in the modified first TCP packet: Uplink traffic of the non-key service to which the first TCP packet belongs is sent to the transmit end of the first TCP packet by using a smaller window, to control the uplink traffic of the non-key service.

In an optional embodiment, that the AP 1 decreases the value of the RWND field in the first TCP packet includes: When the traffic of the non-key service to which the first TCP packet belongs needs to be decreased (that is, when traffic control needs to be performed on the non-key service to which the first TCP packet belongs), the AP 1 decreases the value of the RWND field in the first TCP packet. In this way, on-demand control on the traffic of the non-key service can be implemented. When the AP 1 needs to decrease the traffic of the non-key service to which the first TCP packet belongs, the AP 1 may need to decrease the traffic of the non-key service due to a reason of the AP 1 (for example, congestion occurs on the AP 1), or the AP 1 may need to decrease the traffic of the non-key service due to an indication of another device. The following describes two cases.

Case (1): Due to the reason of the AP 1, the AP 1 needs to decrease the traffic of the non-key service to which the first TCP packet belongs.

For example, wired congestion or air interface congestion occurs on the AP 1, and the AP 1 determines that the traffic of the non-key service to which the first TCP packet belongs needs to be decreased. In this embodiment of this application, an example in which air interface congestion occurs on the AP 1 is used for description. That is, when air interface congestion occurs on the AP 1, the AP 1 determines that the traffic of the non-key service to which the first TCP packet belongs needs to be decreased. In this embodiment of this application, for case (1), a trigger condition of decreasing, by the AP 1 to the traffic of the non-key service to which the first TCP packet belongs is: Air interface congestion occurs on the AP 1.

That air interface congestion occurs on the AP 1 includes: Utilization (channel utilization, CU) of an operating channel of the AP 1 is greater than a target threshold, and a key service of the AP 1 is affected. That is, when the AP 1 determines that the utilization of the operating channel of the AP 1 is greater than the target threshold and the key service of the AP 1 is affected, the AP 1 determines that the traffic of the non-key service to which the first TCP packet belongs needs to be decreased. The target threshold may be set based on an actual situation. For example, the target threshold is 80%.

The key service of the AP 1 is a key service that needs to be forwarded by the AP 1. For example, based on access categories, the key service of the AP 1 may be a VO service or a VI service. That a key service of the AP 1 is affected means that QoS of the key service of the AP 1 is lower than a QoS requirement of the key service. The QoS includes one or more of the following: an average delay, a maximum delay, a jitter, and a throughput. Correspondingly, the QoS requirement includes one or more of the following: an average delay threshold, a maximum delay threshold, a jitter threshold, and a throughput threshold. That QoS of the key service is lower than a QoS requirement of the key service includes one or more of the following: The average delay of the key service is greater than the average delay threshold in the QoS requirement of the key service, the maximum delay of the key service is greater than the maximum delay threshold in the QoS requirement of the key service, the jitter of the key service is greater than the jitter threshold in the QoS requirement of the key service, and the throughput of the key service is less than the throughput threshold in the QoS requirement of the key service.

In an implementation, if at least one QoS indicator (for example, the average delay, the maximum delay, the jitter, or the throughput) of the key service of the AP 1 does not meet the QoS requirement of the key service, the AP 1 determines that the key service is affected. In another implementation, if a quantity of indicators, in QoS indicators of the key service of the AP 1, that do not meet the QoS requirement of the key service is greater than or equal to a specified quantity, the AP 1 determines that the key service is affected. For example, the specified quantity is 2. In still another implementation, if a specific QoS indicator of the key service of the AP 1 does not meet the QoS requirement of the key service, the AP 1 determines that the key service is affected. The specific QoS indicator includes one or more of the average delay, the maximum delay, the jitter, and the throughput.

In this embodiment of this application, the AP 1 may monitor the utilization of the operating channel of the AP 1 and the QoS of the key service of the AP 1 in real time or periodically, and determine whether the utilization of the operating channel of the AP 1 is greater than the target threshold, and determine whether the QoS of the key service of the AP 1 is lower than the QoS requirement of the key service. If the utilization of the operating channel of the AP 1 is greater than the target threshold, and the QoS of the key service of the AP 1 is lower than the QoS requirement of the key service, the AP 1 determines that air interface congestion occurs on the AP 1, and the AP 1 determines that the traffic of the non-key service to which the first TCP packet belongs needs to be decreased. If the utilization of the operating channel of the AP 1 is not greater than the target threshold, or the QoS of the key service of the AP 1 is not lower than the QoS requirement of the key service, the AP 1 determines that no air interface congestion occurs on the AP 1, and the AP 1 determines that the traffic of the non-key service to which the first TCP packet belongs does not need to be decreased. The AP 1 includes a medium access control (medium access control, MAC) layer unit, and an implementation process in which the AP 1 monitors the QoS of the key service of the AP 1 may be executed by the MAC layer unit. The MAC layer unit may be an independent chip, or a processing circuit integrated into a same chip with another unit.

In an optional embodiment, the AP 1 is configured to forward a service, and the service forwarded by the AP 1 includes one or more types of a VO service, a VI service, a BE service, and a BK service. A buffer of the AP 1 includes a queue (for example, a VO queue corresponding to the VO service, a VI queue corresponding to the VI service, a BE queue corresponding to the BE service, and a BK queue corresponding to the BK service) corresponding to each type of service. When receiving a packet of each type of service, the AP 1 first buffers the packet in a corresponding queue of the service, and then forwards the packet in the queue based on a position of the packet in the queue. For example, the key service of the AP 1 is a VO service. The AP 1 monitors an enqueuing timestamp at which each VO packet (for brevity, a packet of a VO service is referred to as a VO packet) enters a VO queue and a dequeuing timestamp (for example, a sending timestamp of the AP 1 for the VO packet) at which each VO packet leaves the VO queue. A time difference between the dequeuing timestamp and the enqueuing timestamp of the VO packet is determined as a delay of the VO packet in the VO queue. In this way, the AP 1 may determine a delay of each VO packet in the VO queue. Then, the AP 1 determines an average value of delays of all VO packets that are successfully sent within specified duration (for example, 1 second) and that are in the VO queue, and determines the average value as an average delay of the VO service. The AP 1 determines a maximum value of the delays of all the VO packets that are successfully sent within the specified duration and that are in the VO queue, and determines the maximum value as a maximum delay of the VO service. The AP 1 determines the maximum value and a minimum value of the delays of all the VO packets that are successfully sent within the specified duration and that are in the VO queue, and determines a difference between the maximum value and the minimum value as a jitter of the VO service. In addition, the AP 1 determines a total data volume (that is, a sum of bytes of all the VO packets) of all the VO packets that are successfully sent within the specified duration, and determines the total data volume as a throughput of the VO service. In this way, QoS of the VO service is monitored.

Case (2): Due to the indication of the another device, the AP 1 needs to decrease the traffic of the non-key service to which the first TCP packet belongs.

In an optional embodiment, when the AP 1 receives an indication used to perform traffic control on the non-key service to which the first TCP packet belongs, the AP 1 determines that the traffic of the non-key service to which the first TCP packet belongs needs to be decreased. To be specific, for the case (2), a trigger condition for the AP 1 to decrease the traffic of the non-key service to which the first TCP packet belongs is: The AP 1 receives the indication used to perform traffic control on the non-key service to which the first TCP packet belongs.

The indication used to perform traffic control on the non-key service to which the first TCP packet belongs may be sent by an intra-frequency neighboring AP (for example, the AP 2 in FIG. 1) of the AP 1 to the AP 1, or may be sent by the another device to the AP 1. In this embodiment of this application, an example in which the indication used to perform traffic control on the non-key service to which the first TCP packet belongs is sent by the AP 2 to the AP 1 is used for description. When wired congestion or air interface congestion occurs on the AP 2, the AP 2 may send, to the AP 1, an indication used to perform traffic control on the non-key service to which the first TCP packet belongs. That air interface congestion occurs on the AP 2 includes: Utilization of an operating channel of the AP 2 is greater than the target threshold, and a key service of the AP 2 is affected. For a process in which the AP 2 determines that the key service of the AP 2 is affected, refer to the process in which the AP 1 determines that the key service of the AP 1 is affected. Details are not described in this embodiment of this application again.

In this embodiment of this application, when receiving the indication that is sent by the AP 2 for performing traffic control on the non-key service to which the first TCP packet belongs, the AP 1 determines that the traffic of the non-key service to which the first TCP packet belongs needs to be decreased, to perform traffic control on the non-key service by decreasing the value of the RWND field in the first TCP packet that is of the non-key service and sent to the target station. In this way, not only the QoS of the key service of the AP 1 can be improved, but also QoS of a service (for example, the key service) of the AP 2 can be improved. In addition, collaboration between the AP 1 and the AP 2 is implemented.

The foregoing two cases describe the trigger conditions for the AP 1 to perform traffic control on the non-key service to which the first TCP packet belongs. The foregoing two trigger conditions may be used independently, or may be used in combination. In addition, the AP 1 may alternatively perform, in another trigger condition, traffic control on the non-key service to which the first TCP packet belongs. This is not limited in this embodiment of this application. The following describes an implementation process of decreasing the value of the RWND field in the first TCP packet by the AP 1.

In this embodiment of this application, the value of the RWND field in the modified first TCP packet is less than the value of the RWND field in the first TCP packet before modification and less than an RWND value that is currently maintained by the AP 1 and that corresponds to a first TCP flow. The first TCP flow is a TCP flow to which the first TCP packet belongs, and belongs to the non-key service. The RWND value that is currently maintained by the AP 1 and that corresponds to the first TCP flow is a value of an RWND field in a TCP packet of the first TCP flow that is previously forwarded by the AP 1 and sent to the target STA. The value of the RWND field in the first TCP packet before modification is set by the transmit end of the first TCP packet in the first TCP packet, and is usually not less than the RWND value that is currently maintained by the AP 1 and that corresponds to the first TCP flow. Therefore, the AP 1 may decrease, based on the RWND value that is currently maintained by the AP 1 and that corresponds to the first TCP flow, the value of the RWND field in the first TCP packet.

In an optional embodiment, the AP 1 decreases the value of the RWND field in the first TCP packet according to a first formula w = w' - 1 + 1/w'. In the first formula, w is a value obtained after the value of the RWND field is decreased, and w' is the RWND value that is currently maintained by the AP 1 and that corresponds to the first TCP flow. The first TCP packet may be a TCP ACK packet, "1" in the first formula indicates a quantity of bytes acknowledged in the first TCP packet, "1/w‴ is a parameter that is set to keep fairness between different TCP flows, and a symbol "/" in "1/w‴ indicates a division sign.

S203: The AP 1 sends a first downlink frame to the target STA, where the first downlink frame includes the modified first TCP packet.

The AP 1 generates the first downlink frame based on the modified first TCP packet, and sends the first downlink frame to the target STA through the operating channel of the AP 1.

After receiving the first downlink frame, the target STA may obtain the modified first TCP packet from the first downlink frame, determine an RWND based on the value of the RWND field in the modified first TCP packet, and send, to the transmit end of the first TCP packet based on the RWND, the traffic of the non-key service to which the first TCP packet belongs. For example, the target STA sends traffic of the first TCP flow to the transmit end of the first TCP packet based on the RWND. The target STA maintains a congestion window (congestion window, CWND). The target STA may send the traffic of the first TCP flow to the transmit end of the first TCP packet based on the RWND, a CWND, and a data volume of a packet that is of the first TCP flow and in a buffer of the target STA, that is, send the traffic of the non-key service. For example, the target STA determines a first data amount corresponding to the RWND and a second data amount corresponding to the CWND, and sends the traffic of the first TCP flow to the transmit end of the first TCP packet based on a smallest value in the first data amount, the second data amount, and the data amount of the packet that is of the first TCP flow and in the buffer of the target STA. The traffic of the first TCP flow sent by the target STA to the transmit end of the first TCP packet may arrive at the transmit end of the first TCP packet after being forwarded by the AP 1.

In conclusion, according to the flow control method provided in this embodiment of this application, after receiving the first TCP packet that is of the non-key service and sent to the target STA, the AP 1 decreases the value of the RWND field in the first TCP packet to obtain the modified first TCP packet, and sends the first downlink frame including the modified first TCP packet to the target STA. The value of the RWND field in the first TCP packet represents a volume of traffic that can be received by the transmit end of the first TCP packet. After receiving the modified first TCP packet, the target STA sends, to the transmit end of the first TCP packet based on the value of the RWND field in the modified first TCP packet, the uplink traffic of the non-key service to which the first TCP packet belongs. In addition, the uplink traffic that is of the non-key service and sent by the target STA to the transmit end of the first TCP packet is forwarded by the AP 1 to the transmit end of the first TCP packet. Because the AP 1 decreases the value of the RWND field in the first TCP packet, the target STA decreases the uplink traffic of the non-key service, to control the uplink traffic of the non-key service. This helps improve the QoS of the key service of the AP 1.

In this embodiment of this application, when at least one trigger condition in S202 is met, the AP 1 triggers a flow control process of the non-key service to which the first TCP packet belongs. In the flow control process, the AP 1 may dynamically decrease the value of the RWND field in the TCP packet that is of the non-key service and sent to the target STA, to improve the QoS of the key service of the AP 1 and keep a received throughput of the AP 1 for the non-key service at a specific level, so as to avoid excessive suppression on the non-key service. For example, the AP 1 dynamically decreases the value of the RWND field in the TCP packet that is of the first TCP flow of the non-key service and sent to the target STA, so that the received throughput of the AP 1 for the non-key service is stabilized at a target throughput.

In an optional implementation of this embodiment of this application, as shown in FIG. 3, after S203, the flow control method further includes the following steps S204a to S206a.

S204a: The AP 1 receives a second TCP packet sent to the target STA, where the second TCP packet belongs to the non-key service.

The second TCP packet and the first TCP packet belong to a same non-key service and a same TCP flow. For example, both the second TCP packet and the first TCP packet belong to a BK service, and belong to the first TCP flow.

The AP 1 may receive, from a previous hop of the AP 1 on a transmission path of the second TCP packet, the second TCP packet sent to the target STA. The second TCP packet may be a TCP data packet or a TCP ACK packet, and may be a downlink TCP packet. An example in which the second TCP packet is a downlink TCP ACK packet is used for description. For example, as shown in FIG. 1, the direction from the server to the STA is the downlink direction. The second TCP packet may be a TCP ACK packet (that is, a downlink TCP ACK packet) sent from the server 101 to the STA 1, and the AP 1 receives the second TCP packet from the network device 103.

S205a: When the received throughput of the AP 1 for the non-key service is less than the target throughput, the AP 1 decreases a value of an RWND field in the second TCP packet to obtain a modified second TCP packet. A value of an RWND field in the modified second TCP packet is less than the value of the RWND field in the second TCP packet before modification and greater than the value of the RWND field in the modified first TCP packet.

The AP 1 may decrease the value of the RWND field in the first TCP packet to implement suppression of the uplink traffic of the non-key service to which the first TCP packet belongs. After the uplink traffic of the non-key service is suppressed, the received throughput of the AP 1 for the non-key service may be less than the target throughput. Therefore, after S203, the AP 1 may determine the received throughput of the AP 1 for the non-key service in real time or periodically, and determine whether the received throughput of the AP 1 for the non-key service is less than the target throughput. If the received throughput of the AP 1 for the non-key service is less than the target throughput, when the AP 1 receives the second TCP packet that is of the first TCP flow of the non-key service and sent to the target STA, the AP 1 decreases the value of the RWND field in the second TCP packet to obtain the modified second TCP packet, so that the value of the RWND field in the modified second TCP packet is less than the value of the RWND field in the second TCP packet before modification and greater than the value of the RWND field in the modified first TCP packet. In this way, the received throughput of the AP 1 for the non-key service can be stabilized at the target throughput. In an optional embodiment, if the received throughput of the AP 1 for the non-key service is greater than the target throughput, when the AP 1 receives the second TCP packet, the AP 1 may continue to decrease the value of the RWND field in the second TCP packet based on the value of the RWND field in the first TCP packet, so that the value of the RWND field in the modified second TCP packet is less than the value of the RWND field in the second TCP packet before modification and less than the value of the RWND field in the modified first TCP packet, to suppress the uplink traffic of the non-key service.

S205a is described by using an example in which the received throughput of the AP 1 for the non-key service is less than the target throughput. The AP 1 decreases the value of the RWND field in the second TCP packet to obtain the modified second TCP packet. The value of the RWND field in the modified second TCP packet is less than the value of the RWND field in the second TCP packet before modification and greater than the value of the RWND field in the modified first TCP packet. In an optional embodiment, the AP 1 increases the RWND value based on the RWND value that is currently maintained by the AP 1 and that corresponds to the first TCP flow of the non-key service, to decrease the value of the RWND field in the second TCP packet to be equal to the increased RWND value. After S202, the RWND value that is maintained by the AP 1 and that corresponds to the first TCP flow is updated to the value of the RWND field in the modified first TCP packet. Therefore, for S205a, the RWND value that is currently maintained by the AP 1 and that corresponds to the first TCP flow is the value of the RWND field in the modified first TCP packet.

In an optional embodiment, the AP 1 decreases the value of the RWND field in the second TCP packet according to a second formula w = w' + 1 + 1/w'. In the second formula, w is a value obtained after the value of the RWND field is decreased, w' is the RWND value (for S205a, the RWND value that is currently maintained by the AP 1 and that corresponds to the first TCP flow is the value of the RWND field in the modified first TCP packet) that is currently maintained by the AP 1 and that corresponds to the first TCP flow of the non-key service. The second TCP packet may be a TCP ACK packet, "1" in the second formula indicates a quantity of bytes acknowledged in the second TCP packet, " 1/w‴ is a parameter that is set to keep fairness between different TCP flows, and a symbol"/" in "1/w‴ indicates a division sign.

In an optional embodiment, the second TCP packet is a TCP ACK packet. Before decreasing the value of the RWND field in the second TCP packet, the AP 1 determines whether the second TCP packet and the first TCP packet are two adjacent TCP ACK packets in the first TCP flow. If the second TCP packet and the first TCP packet are not two adjacent TCP ACK packets in the first TCP flow, the AP 1 decreases the value of the RWND field in the second TCP packet according to the foregoing second formula, so that the target STA increases uplink traffic of the first TCP flow of the non-key service. If the second TCP packet and the first TCP packet are two adjacent TCP ACK packets in the first TCP flow, the AP 1 modifies the value of the RWND field in the second TCP packet according to a window keeping formula w = w', so that the target STA keeps an RWND (that is, an RWND indicated by the value of the RWND field in the modified first TCP packet) that is currently used by the target STA to send the first TCP flow of the non-key service.

It should be noted that, the received throughput of the AP 1 for the non-key service may include traffic that is of the non-key service and received by the AP 1 from the target STA, and may include traffic that is of the non-key service and received by the AP 1 from another STA associated with the AP 1. For example, the non-key service is a BK service. The AP 1 determines a received throughput of the AP 1 for the BK service based on a quantity or data volume of packets in the BK queue of the AP 1, and the packets in the BK queue of the AP 1 may include a packet that is of the BK service and received by the AP 1 from the target STA, and may include a packet that is of the BK service and received by the AP 1 from a STA other than the target STA. Therefore, the received throughput of the AP 1 for the non-key service includes traffic that is of the non-key service and received by the AP 1 from all STAs associated with the AP 1.

S206a: The AP 1 sends a second downlink frame to the target STA, where the second downlink frame includes the modified second TCP packet.

The AP 1 generates the second downlink frame based on the modified second TCP packet, and sends the second downlink frame to the target STA through the operating channel of the AP 1.

After receiving the second downlink frame, the target STA may obtain the modified second TCP packet from the second downlink frame, determine an RWND based on the value of the RWND field in the modified second TCP packet, and send, to the transmit end of the second TCP packet based on the RWND, the traffic of the non-key service to which the second TCP packet belongs. For example, the target STA sends the traffic of the first TCP flow to a transmit end of the second TCP packet (the transmit end of the second TCP packet and the transmit end of the first TCP packet are a same end) based on the RWND. The traffic of the first TCP flow sent by the target STA to the transmit end of the second TCP packet may arrive at the transmit end of the second TCP packet after being forwarded by the AP 1.

In conclusion, according to the traffic control method provided in this embodiment of this application, after the AP 1 decreases the value of the RWND field in the first TCP packet that is of the non-key service and sent to the target STA, the target STA decreases the uplink traffic of the non-key service, to control the uplink traffic of the non-key service. Thereafter, if the received throughput of the AP 1 for the non-key service is less than the target throughput, the AP 1 decreases the value of the RWND field in the second TCP packet that is of the non-key service and sent to the target STA, to obtain the modified second TCP packet. The value of the RWND field in the modified second TCP packet is less than the value of the RWND field in the second TCP packet before modification and greater than the value of the RWND field in the modified first TCP packet. After the AP 1 decreases the value of the RWND field in the second TCP packet, the target STA may increase the uplink traffic of the non-key service. In this way, the uplink traffic of the non-key service is increased. Therefore, in this embodiment of this application, the traffic of the non-key service is dynamically controlled, and the received throughput of the AP 1 for the non-key service may be stabilized at a specific level while the QoS of the key service of the AP 1 is improved, to avoid excessive suppression on the non-key service.

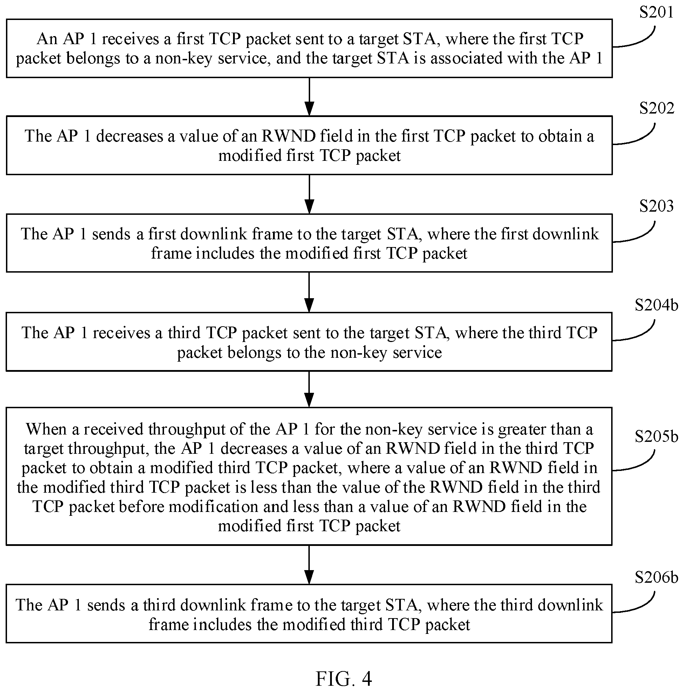

As described above, the AP 1 may dynamically decrease the value of the RWND field in the TCP packet that is of the non-key service and sent to the target STA, so that the AP 1 keeps the received throughput of the non-key service at a specific level while the QoS of the key service of the AP 1 is improved. In an optional implementation of this embodiment of this application, as shown in FIG. 4, after S203, the flow control method may alternatively include the following steps S204b to S206b.

S204b: The AP 1 receives a third TCP packet sent to the target STA, where the third TCP packet belongs to the non-key service.

The third TCP packet and the first TCP packet belong to a same non-key service and a same TCP flow. For example, both the third TCP packet and the first TCP packet belong to a BK service, and belong to the first TCP flow.

The AP 1 may receive, from a previous hop of the AP 1 on a transmission path of the third TCP packet, the third TCP packet sent to the target STA. The third TCP packet may be a TCP data packet or a TCP ACK packet, and may be a downlink TCP packet. An example in which the third TCP packet is a downlink TCP ACK packet is used for description. For example, as shown in FIG. 1, the direction from the server to the STA is the downlink direction. The third TCP packet may be a TCP ACK packet (that is, a downlink TCP ACK packet) sent from the server 101 to the STA 1, and the AP 1 receives the third TCP packet from the network device 103.

S205b: When the received throughput of the AP 1 for the non-key service is greater than the target throughput, the AP 1 decreases a value of an RWND field in the third TCP packet to obtain a modified third TCP packet. The value of the RWND field in the modified third TCP packet is less than the value of the RWND field in the third TCP packet before modification and less than the value of the RWND field in the modified first TCP packet.

The AP 1 may decrease the value of the RWND field in the first TCP packet to implement suppression of the uplink traffic of the non-key service to which the first TCP packet belongs. After the uplink traffic of the non-key service is suppressed, the received throughput of the AP 1 for the non-key service may still be greater than the target throughput. Therefore, after S203, the AP 1 may determine the received throughput of the AP 1 for the non-key service in real time or periodically, and determine whether the received throughput of the AP 1 for the non-key service is greater than the target throughput. If the received throughput of the AP 1 for the non-key service is greater than the target throughput, when the AP 1 receives the third TCP packet that is of the first TCP flow of the non-key service and sent to the target STA, the AP 1 decreases the value of the RWND field in the third TCP packet to obtain the modified third TCP packet, so that the value of the RWND field in the modified third TCP packet is less than the value of the RWND field in the third TCP packet before modification and less than the value of the RWND field in the modified first TCP packet. In this way, the received throughput of the AP 1 for the non-key service can be stabilized at the target throughput. In an optional embodiment, if the received throughput of the AP 1 for the non-key service is less than the target throughput, when the AP 1 receives the third TCP packet, the AP 1 may increase the value of the RWND field in the third TCP packet based on the value of the RWND field in the first TCP packet, so that the value of the RWND field in the modified third TCP packet is less than the value of the RWND field in the third TCP packet before modification and greater than the value of the RWND field in the modified first TCP packet.

S205b is described by using an example in which the received throughput of the AP 1 for the non-key service is greater than the target throughput. The AP 1 decreases the value of the RWND field in the third TCP packet to obtain the modified third TCP packet. The value of the RWND field in the modified third TCP packet is less than the value of the RWND field in the third TCP packet before modification and less than the value of the RWND field in the modified first TCP packet. The value of the RWND field in the third TCP packet before modification is set by a transmit end of the third TCP packet in the third TCP packet, the value of the RWND field in the third TCP packet before modification is usually not less than the RWND value of the first TCP flow that is currently maintained by the AP 1 and that corresponds to the non-key service. After S202, the AP 1 may update the RWND value that is maintained by the AP 1 and that corresponds to the first TCP flow to the value of the RWND field in the modified first TCP packet. Therefore, for S205b, the RWND value that is currently maintained by the AP 1 and that corresponds to the first TCP flow is the value of the RWND field in the modified first TCP packet. That is, the value of the RWND field in the third TCP packet before modification is usually not less than the value of the RWND field in the modified first TCP packet. Therefore, in S205b, the AP 1 may decrease the value of the RWND field in the third TCP packet based on the value of the RWND field in the modified first TCP packet. In this way, the value of the RWND field in the modified third TCP packet may be less than the value of the RWND field in the third TCP packet before modification and less than the value of the RWND field in the modified first TCP packet.

In an optional embodiment, the AP 1 decreases the value of the RWND field in the third TCP packet according to the first formula in S202. To be specific, the AP 1 decreases the value of the RWND field in the third TCP packet based on the value of the RWND field in the modified first TCP packet according to the first formula.

In an optional embodiment, the third TCP packet is a TCP ACK packet. Before decreasing the value of the RWND field in the third TCP packet, the AP 1 determines whether the third TCP packet and the first TCP packet are two adjacent TCP ACK packets in the first TCP flow. If the third TCP packet and the first TCP packet are not two adjacent TCP ACK packets in the first TCP flow, the AP 1 decreases the value of the RWND field in the third TCP packet according to the foregoing second formula, so that the target STA decreases uplink traffic of the first TCP flow of the non-key service. If the third TCP packet and the first TCP packet are two adjacent TCP ACK packets in the first TCP flow, the AP 1 modifies the value of the RWND field in the third TCP packet according to a window keeping formula w = w', so that the target STA keeps an RWND (that is, an RWND indicated by the value of the RWND field in the modified first TCP packet) that is currently used by the target STA to send the first TCP flow of the non-key service.

S206b: The AP 1 sends a third downlink frame to the target STA, where the third downlink frame includes the modified third TCP packet.

The AP 1 generates the third downlink frame based on the modified third TCP packet, and sends the third downlink frame to the target STA through the operating channel of the AP 1.

After receiving the third downlink frame, the target STA may obtain the modified third TCP packet from the third downlink frame, determine an RWND based on the value of the RWND field in the modified third TCP packet, and send, to the transmit end of the third TCP packet based on the RWND, the traffic of the non-key service to which the third TCP packet belongs. For example, the target STA sends the traffic of the first TCP flow to a transmit end of the third TCP packet (the transmit end of the third TCP packet and the transmit end of the first TCP packet are a same end) based on the RWND. The traffic of the first TCP flow sent by the target STA to the transmit end of the third TCP packet may arrive at the transmit end of the third TCP packet after being forwarded by the AP 1.

In conclusion, according to the traffic control method provided in this embodiment of this application, after the AP 1 decreases the value of the RWND field in the first TCP packet that is of the non-key service and sent to the target STA, the target STA decreases the uplink traffic of the non-key service, to control the uplink traffic of the non-key service. Thereafter, if the received throughput of the AP 1 for the non-key service is greater than the target throughput, the AP 1 decreases the value of the RWND field in the third TCP packet that is of the non-key service and sent to the target STA, to obtain the modified third TCP packet. The value of the RWND field in the modified third TCP packet is less than the value of the RWND field in the third TCP packet before modification and less than the value of the RWND field in the modified first TCP packet. After the AP 1 decreases the value of the RWND field in the third TCP packet, the target STA continues to decrease the uplink traffic of the non-key service. In this way, the uplink traffic of the non-key service is controlled. Therefore, in this embodiment of this application, the traffic of the non-key service is dynamically controlled, and the received throughput of the AP 1 for the non-key service may be stabilized at a specific level while the QoS of the key service of the AP 1 is improved, to avoid excessive suppression on the non-key service.

In this embodiment of this application, the first TCP packet, the second TCP packet, and the third TCP packet are TCP ACK packets in a same TCP flow, and both the second TCP packet and the third TCP packet are located after the first TCP packet. Based on different received throughputs of the AP 1 for the non-key service, each of the second TCP packet and the third TCP packet is a TCP packet whose value of the RWND field needs to be decreased. The second TCP packet may be located before or after the third TCP packet, and even the second TCP packet and the third TCP packet may be a same TCP ACK packet. If the second TCP packet and the third TCP packet are a same TCP ACK packet, S205a in the embodiment shown in FIG. 3 and S205b in the embodiment shown in FIG. 4 may be considered as different processing manners for the same TCP ACK packet. For ease of description, the second TCP packet and the third TCP packet are distinguished in this embodiment of this application. The embodiment shown in FIG. 3 and the embodiment shown in FIG. 4 may be two parallel embodiments.

As described above, when the at least one trigger condition described in S202 is met, the AP 1 triggers the traffic control process for the non-key service. The foregoing S201 to S203, S204a to S206a, and S204b to S206b all belong to a dynamic adjustment process in the traffic control process. In the traffic control process, the AP 1 modifies the value of the RWND field in the downlink TCP ACK packet of the non-key service. The AP 1 may include a forwarding layer unit, and a process of modifying the value of the RWND field in the TCP packet may be performed by the forwarding layer unit. The forwarding layer unit may be an independent chip, or a processing circuit integrated into a same chip with another unit. In an optional embodiment, if the AP 1 determines that any one of the trigger conditions described in S202 is not met, the AP 1 does not trigger the traffic control process for the non-key service. When receiving the TCP packet of the non-key service, the AP 1 usually does not modify the value of the RWND field in the TCP packet.

In addition, through the traffic control process, the QoS of the key service of the AP 1 can be improved, and the received throughput of the AP 1 for the non-key service is stabilized at a specific level. After the QoS of the key service of the AP 1 is improved and the received throughput of the AP 1 for the non-key service is stabilized at a specific level, or after the AP 1 receives an indication for canceling traffic control on the non-key service, the AP 1 may end the traffic control process. After the AP 1 ends the traffic control process, when the AP 1 receives the TCP packet of the non-key service, the AP 1 does not modify the value of the RWND field in the TCP packet.

According to the technical solutions provided in this embodiment of this application, the AP decreases the value of the RWND field in the TCP packet that is of the non-key service and sent to the target STA, to implement regulation and control on the volume of the data that is of the non-key service and sent by the target STA. The traffic control method can adjust service traffic of a specified STA and a specified AC, relieve air interface congestion on the AP, and improve the QoS of the key service. The descriptions of the foregoing embodiments are merely examples, and do not constitute a limitation on the technical solutions of this application. The traffic control method provided in embodiments of this application may be extended to any communications system that supports a TCP protocol, for example, a communications system formed by a base station (base station, BS) and a terminal device (user equipment, UE), a communications system formed by a core switch and an aggregation switch, a communications system formed by an aggregation switch and an access switch, a communications system formed by an access switch and an AP, and a communications system formed by an access switch and a base station. A device that performs the traffic control method in this application is not limited to an AP, and may further be a BS, a core switch, an aggregation switch, an access switch, or the like. This is not limited in embodiments of this application.

As can be known from the descriptions of the foregoing embodiments, the trigger condition for the AP 1 to trigger the traffic control process on the non-key service includes: Air interface congestion occurs on the AP 1, and/or the AP 1 receives the indication used to perform traffic control on the non-key service. To facilitate understanding of the technical solutions of this application, the following describes, with reference to FIG. 1, content of performing, by the AP 1, traffic control on the non-key service by using an example in which air interface congestion occurs on the AP 1 in a process in which the STA 1 sends the non-key service to the server 101. The AP 1 includes a physical layer (physical layer, PHY) unit, a MAC layer unit, and a forwarding layer unit. The AP 1 performs traffic control on the non-key service mainly by using the PHY unit, the MAC layer unit, and the forwarding layer unit. The following description relates to the MAC layer unit and the forwarding layer unit in the AP 1.

S301: The MAC layer unit in the AP 1 monitors in real time or periodically whether air interface congestion occurs on the AP 1. If air interface congestion does not occur on the AP 1, the AP 1 does not trigger the traffic control process, and S301 to S309 are performed. If air interface congestion occurs on the AP 1, the AP 1 triggers the traffic control process, and S310 to S320 are performed.

For example, the MAC layer unit of the AP 1 monitors in real time or periodically whether the utilization of the operating channel of the AP 1 the MAC layer unit of the AP 1 is greater than the target threshold, and whether the QoS of the key service of the AP 1 is lower than the QoS requirement of the key service. If the utilization of the operating channel of the AP 1 is greater than the target threshold and the QoS of the key service of the AP 1 is lower than the QoS requirement of the key service, air interface congestion occurs on the AP 1. If the utilization of the operating channel of the AP 1 is not greater than the target threshold, and/or the QoS of the key service of the AP 1 is not lower than the QoS requirement of the key service, no air interface congestion occurs on the AP 1.

S302: The PHY unit in the AP 1 receives a TCP data packet that is of the non-key service and sent by the STA 1 to the server 101.

S303: The PHY unit in the AP 1 sends the TCP data packet to the MAC layer unit in the AP 1.

S304: The MAC layer unit in the AP 1 sets a status bit NO_LIMIT in the TCP data packet (that is, sets a value of the status bit in the TCP data packet as NO LIMIT), to indicate that traffic control is not performed on the non-key service.

S305: The MAC layer unit in the AP 1 sends the TCP data packet to the forwarding layer unit in the AP 1.

S306: The forwarding layer unit in the AP 1 updates, based on the value of the status bit in the TCP data packet, the value of the status bit in a flow table of the first TCP flow of the non-key service to NO LIMIT. The flow table of the first TCP flow further records an RWND value, a packet direction, and a sequence number (sequence number) of a TCP ACK packet. The RWND value recorded in the flow table of the first TCP flow is the RWND value that is currently maintained by the AP 1 and that corresponds to the first TCP flow.

S307: The forwarding layer unit in the AP 1 forwards the TCP data packet to the server 101. The TCP data packet is successively forwarded by the network device 103 and the network device 102 to the server 101.

S308: The forwarding layer unit in the AP 1 receives a TCP ACK packet that is of the non-key service and sent by the server 101 to the STA 1, where the TCP ACK packet and the TCP data packet in S302 to S307 belong to the same TCP flow.

S309: The forwarding layer unit in the AP 1 does not modify a value of an RWND field in the TCP ACK packet based on the value (that is, NO LIMIT) of the status bit in the flow table of the first TCP flow, and sends a downlink frame including the TCP ACK packet to the STA 1.

S310: The MAC layer unit in the AP 1 monitors in real time the received throughput of the AP 1 for the non-key service.

S311: The PHY unit in the AP 1 receives a TCP data packet that is of the non-key service and sent by the STA 1 to the server 101.

S312: The PHY unit in the AP 1 sends the TCP data packet to the MAC layer unit in the AP 1.

S313: If the received throughput of the AP 1 for the non-key service is greater than the target throughput, the MAC layer unit in the AP 1 sets a status bit BRAKE in the TCP data packet (that is, sets a value of the status bit in the TCP data packet as BRAKE), to indicate to decrease an RWND for sending the non-key service. If the received throughput of the AP 1 for the non-key service is less than the target throughput, the MAC layer unit in the AP 1 sets a status bit ACC in the TCP data packet (that is, sets the value of the status bit in the TCP data packet as ACC), to indicate to increase the RWND for sending the non-key service. If the received throughput of the AP 1 for the non-key service is equal to the target throughput, the MAC layer unit in the AP 1 sets a status bit KEEP in the TCP data packet (that is, sets the value of the status bit in the TCP data packet as KEEP), to indicate to keep the RWND for sending the non-key service.

S314: The MAC layer unit in the AP 1 sends the TCP data packet to the forwarding layer unit in the AP 1.

S315: The forwarding layer unit in the AP 1 updates, based on the value of the status bit in the TCP data packet, the value of the status bit in a flow table of the first TCP flow of the non-key service. If the value of the status bit in the TCP data packet is BRAKE, the forwarding layer unit in the AP 1 updates the value of the status bit in the flow table of the first TCP flow to BRAKE. If the value of the status bit in the TCP data packet is ACC, the forwarding layer unit in the AP 1 updates the value of the status bit in the flow table of the first TCP flow to ACC. If the value of the status bit in the TCP data packet is KEEP, the forwarding layer unit in the AP 1 updates the value of the status bit in the flow table of the first TCP flow to KEEP. The flow table of the first TCP flow further records an RWND value, a packet direction, and a sequence number of a TCP ACK packet. The RWND value recorded in the flow table of the first TCP flow is the RWND value that is currently maintained by the AP 1 and that corresponds to the first TCP flow.

S316: The forwarding layer unit in the AP 1 forwards the TCP data packet to the server 101. The TCP data packet is successively forwarded by the network device 103 and the network device 102 to the server 101.

S317: The forwarding layer unit in the AP 1 receives a TCP ACK packet that is of the non-key service and sent by the server 101 to the STA 1, where the TCP ACK packet and the TCP data packet in S311 to S316 belong to the same TCP flow.

S318: The forwarding layer unit in the AP 1 modifies a value of an RWND field in the TCP ACK packet based on the value of the status bit in the flow table of the first TCP flow and the RWND value recorded in the flow table of the first TCP flow, to obtain a modified TCP ACK packet. If the value of the status bit in the flow table of the first TCP flow is BRAKE, the forwarding layer unit in the AP 1 decreases the value of the RWND field in the TCP ACK packet according to the first formula w = w' - 1 + 1/w'. If the value of the status bit in the flow table of the first TCP flow is ACC, the forwarding layer unit in the AP 1 decreases the value of the RWND field in the TCP ACK packet according to the second formula w = w' + 1 + 1/w'. If the value of the status bit in the flow table of the first TCP flow is KEEP, the forwarding layer unit in the AP 1 modifies the value of the RWND field in the TCP ACK packet according to a window keeping formula w = w'.

S319: The forwarding layer unit in the AP 1 updates, based on the value of the RWND field in the modified TCP ACK packet, the RWND value recorded in the flow table of the first TCP flow. That is, the forwarding layer unit in the AP 1 updates the RWND value recorded in the flow table of the first TCP flow to the value of the RWND field in the modified TCP ACK packet. It should be noted that, if the forwarding layer unit in the AP 1 determines that the value of the status bit in the flow table of the first TCP flow is KEEP in S318, S319 may not be performed.

S320: The forwarding layer unit in the AP 1 sends a downlink frame including the modified TCP ACK packet to the STA 1.

Next time, the STA 1 may send the uplink traffic of the non-key service to the server 101 based on the value of the RWND field in the modified TCP ACK packet, to control the uplink traffic of the non-key service.

It should be noted that, the TCP data packet sent by the STA 1 to the server 101 is actually a physical layer protocol data unit (physical layer protocol data unit, PPDU). The TCP data packet that is received by the PHY unit in the AP 1, sent by the PHY unit in the AP 1 to the MAC layer unit in the AP 1, and actually received by the MAC layer unit in the AP 1 is a PPDU. The MAC layer unit in the AP 1 decapsulates the PPDU to remove a PHY header in the PPDU, to obtain a MAC protocol data unit (MAC protocol data unit, MPDU). After setting a status bit in the MPDU, the MAC layer unit in the AP 1 sends the MPDU to the forwarding layer unit in the AP 1. The forwarding layer unit in the AP 1 decapsulates the MPDU to remove a MAC header in the MPDU, to obtain a MAC layer service data unit (MAC service data unit, MSDU). The forwarding layer unit in the AP 1 actually forwards the MSDU to the server 101. For ease of description in this embodiment of this application, in S302 to S307 and S311 to S316, the PPDU, the MPDU, and the MSDU are all referred to as TCP data packets.

In addition, the TCP ACK packet sent by the server 101 to the STA 1 is actually an MSDU. Therefore, the forwarding layer unit in the AP 1 actually receives the MSDU. After receiving the MSDU, the forwarding layer unit in the AP 1 sends the MSDU to the MAC layer unit in the AP 1. The MAC layer unit in the AP 1 encapsulates the MAC header in the MSDU to obtain the MPDU, and sends the MPDU to the PHY unit in the AP 1. The PHY unit in the AP 1 encapsulates the PHY header in the MPDU to obtain the PPDU, and sends the PPDU to the STA 1. For ease of description in this embodiment of this application, in S308 and S309 and S317 to S320, the PPDU, the MPDU, and the MSDU are all referred to as TCP ACK packets.

The TCP packet is usually identified in the forwarding layer unit, and the PHY unit and the MAC layer unit usually do not identify the TCP packet.

It should be further noted that the status bit in this embodiment of this application is a status bit used inside the AP, and the AP actually does not modify any content or header of the TCP packet. The status bit may be two bits. In an example, bits corresponding to NO_LIMIT are 00, bits corresponding to KEEP are 01, bits corresponding to BRAKE are 10, and bits corresponding to ACC are 11. This is not limited in this embodiment of this application.

The following describes an apparatus embodiment of this application. An apparatus of this application may be configured to perform the traffic control method of this application. For details not disclosed in the apparatus embodiment of this application, refer to the method embodiment of this application.

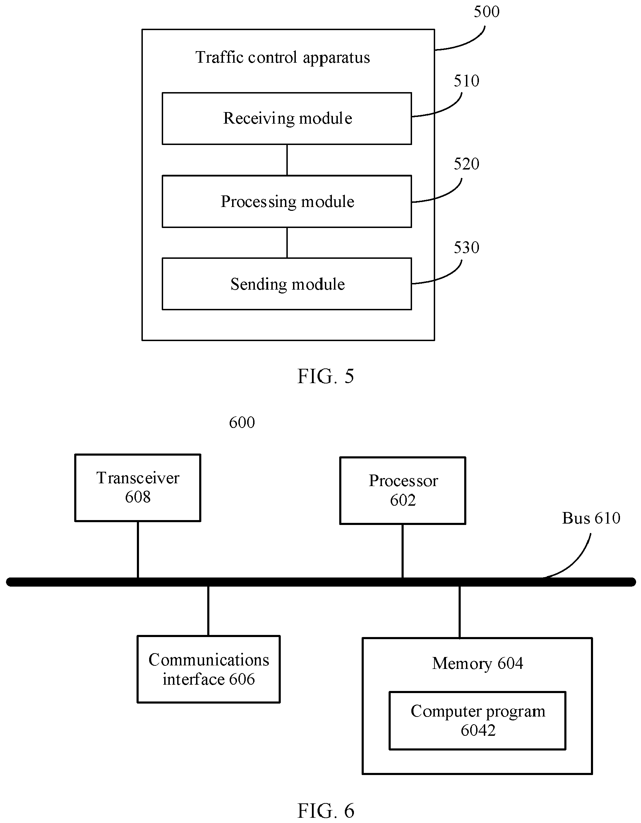

FIG. 5 is a schematic diagram of a structure of a traffic control apparatus 500 according to an embodiment of this application. The traffic control apparatus 500 is applied to an access point. For example, the traffic control apparatus 500 is the access point or a functional component in the access point. The access point may be the AP 1 or the AP 2 in the communications system shown in FIG. 1. Refer to FIG. 5. The traffic control apparatus 500 includes a receiving module 510, a processing module 520, and a sending module 530.

The receiving module 510 is configured to receive a first TCP packet sent to a target station, where the first TCP packet belongs to a non-key service, and the target station is associated with the access point. For a function implementation of the receiving module 510, refer to the related description in S201.

The processing module 520 is configured to decrease a value of an RWND field in the first TCP packet, to obtain a modified first TCP packet. For a function implementation of the processing module 520, refer to the related description in S202.

The sending module 530 is configured to send a first downlink frame to the target station, where the first downlink frame includes the modified first TCP packet. For a function implementation of the sending module 530, refer to the related description in S203.

Optionally, the first TCP packet is a TCP ACK packet.

Optionally, the processing module 520 is configured to: when traffic of the non-key service needs to be decreased, decrease the value of the RWND field in the first TCP packet.

Optionally, the processing module 520 is configured to: when utilization of an operating channel of the access point is greater than a target threshold and a key service of the access point is affected, decrease the value of the RWND field in the first TCP packet.

Optionally, the processing module 520 is configured to: when the access point receives an indication used to perform traffic control on the non-key service, decrease the value of the RWND field in the first TCP packet.

Optionally, the indication used to perform traffic control on the non-key service is from an intra-frequency neighboring access point of the access point.

Optionally, the receiving module 510 is further configured to receive a second TCP packet sent to the target station, where the second TCP packet belongs to the non-key service. For a function implementation of the receiving module 510, refer to the related description in S204a.

The processing module 520 is further configured to: when a received throughput of the access point for the non-key service is less than a target throughput, decrease a value of an RWND field in the second TCP packet to obtain a modified second TCP packet, where a value of an RWND field in the modified second TCP packet is less than the value of the RWND field in the second TCP packet before modification and greater than a value of an RWND field in the modified first TCP packet. For a function implementation of the processing module 520, refer to the related description in S205a.

The sending module 530 is further configured to send a second downlink frame to the target station, where the second downlink frame includes the modified second TCP packet. For a function implementation of the sending module 530, refer to the related description in S206a.

Optionally, the second TCP packet is a TCP ACK packet.

Optionally, the receiving module 510 is further configured to receive a third TCP packet sent to the target station, where the third TCP packet belongs to the non-key service. For a function implementation of the receiving module 510, refer to the related description in S204b.

The processing module 520 is further configured to: when a received throughput of the access point for the non-key service is greater than a target throughput, decrease a value of an RWND field in the third TCP packet to obtain a modified third TCP packet, where a value of an RWND field in the modified third TCP packet is less than the value of the RWND field in the third TCP packet before modification and less than a value of an RWND field in the modified first TCP packet. For a function implementation of the processing module 520, refer to the related description in S205b.

The sending module 530 is further configured to send a third downlink frame to the target station, where the third downlink frame includes the modified third TCP packet. For a function implementation of the sending module 530, refer to the related description in S206b.

Optionally, the third TCP packet is a TCP ACK packet.

Optionally, traffic of the non-key service is greater than a target threshold.

In conclusion, according to the flow control apparatus provided in this embodiment of this application, after receiving the first TCP packet that is of the non-key service and sent to the target station, the access point decreases the value of the RWND field in the first TCP packet to obtain the modified first TCP packet, and sends the first downlink frame including the modified first TCP packet to the target station. The value of the RWND field in the first TCP packet represents a volume of traffic that can be received by a transmit end of the first TCP packet. After receiving the modified first TCP packet, the target station sends, to the transmit end of the first TCP packet based on the value of the RWND field in the modified first TCP packet, uplink traffic of the non-key service to which the first TCP packet belongs. In addition, the uplink traffic that is of the non-key service and sent by the target station to the transmit end of the first TCP packet is forwarded by the access point to the transmit end of the first TCP packet. Because the access point decreases the value of the RWND field in the first TCP packet, the target station decreases the uplink traffic of the non-key service, to control the uplink traffic of the non-key service. This helps improve QoS of a key service of the access point.

An embodiment of this application provides a traffic control apparatus. The traffic control apparatus may be an AP or a functional component in the AP. The traffic control apparatus includes a processor, a memory, and a transceiver.

The transceiver is configured to perform sending and receiving actions in the traffic control method provided in the foregoing embodiments.

The memory is configured to store a computer program.

The processor is configured to execute the computer program stored in the memory, to perform processing actions in the traffic control method provided in the foregoing embodiments.

In an example, FIG. 6 is a schematic diagram of a structure of a traffic control apparatus 600 according to an embodiment of this application. The traffic control apparatus 600 includes a processor 602, a memory 604, a communications interface 606, a transceiver 608, and a bus 610. The processor 602, the memory 604, the communications interface 606, and the transceiver 608 are communicatively connected to each other through the bus 610. A connection manner between the processor 602, the memory 604, the communications interface 606, and the transceiver 608 shown in FIG. 6 is merely an example. In an implementation process, the processor 602, the memory 604, the communications interface 606, and the transceiver 608 may be communicatively connected to each other in another connection manner other than the bus 610.

The memory 604 may be configured to store a computer program 6042 (or referred to as program code). The computer program 6042 includes instructions and data. The memory 604 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, a register, a compact disc read-only memory (compact disc read-only Memory, CD-ROM) or other optical disk storage, optical disc storage (including a compact disc, a laser disc, an optical disc, a digital versatile disc, a Blu-ray disc, and the like), a disk, or another magnetic storage device.

The processor 602 may be a general-purpose processor. The general-purpose processor may be a processor that performs specific a step and/or operation by reading and executing a computer program (for example, the computer program 6042) stored in a memory (for example, the memory 604). In a process of performing the foregoing step and/or operation, the general-purpose processor may use the computer program stored in the memory (for example, the memory 604). The stored computer program may be executed, for example, to implement a related function of the processing module 520. The general-purpose processor may be, for example, but is not limited to, a central processing unit (central processing unit, CPU). The processor 602 may also be a dedicated processor. The dedicated processor may be a processor specially designed to perform a specific step and/or operation. The dedicated processor may be, for example, but is not limited to, a digital signal processor (digital signal processor, DSP), a network processor (network processor, NP), an application-specific integrated circuit (application-specific integrated circuit, ASIC), a complex program logic device (complex programmable logical device, CPLD), a field-programmable gate array (field-programmable gate array, FPGA), generic array logic (generic array logic, GAL), and the like. In addition, the processor 602 may alternatively be a combination of a plurality of processors, that is, a multi-core processor. The processor 602 may include at least one circuit, and may execute the computer program stored in the memory 604, to perform all or some processing steps of the traffic control method provided in the foregoing embodiments.

The communications interface 606 may include an input/output (input/output, I/O) interface, a physical interface, a logical interface, and the like that are configured to implement interconnection between components in the traffic control apparatus 600, and an interface that is configured to implement interconnection between the traffic control apparatus 600 and another device (for example, a network device). The logical interface is an internal interface of the traffic control apparatus 600, and may be configured to implement interconnection between the components in the traffic control apparatus 600. The physical interface may be a gigabit Ethernet (gigabit Ethernet, GE) interface, and may be configured to implement interconnection between the traffic control apparatus 600 and another device. The physical interface is configured for communication between the traffic control apparatus 600 and another device, for example, configured for information sending and receiving between the traffic control apparatus 600 and another device. The physical interface may implement the related functions of the foregoing receiving module 510 and sending module 530.

The transceiver 608 may be a radio frequency transceiver. The transceiver 608 may include a radio frequency unit and an antenna. The transceiver 608 may also be configured for communication between the traffic control apparatus 600 and another device or a communications network, to implement information sending and receiving between the traffic control apparatus 600 and another device. The transceiver 608 may also implement the related functions of the foregoing receiving module 510 and sending module 530. In some embodiments, the transceiver 608 may be incorporated into a physical interface. In other words, the transceiver 608 may belong to the physical interface.

The bus 610 may be any type of communications bus configured to implement interconnection between the processor 602, the memory 604, the communications interface 606, and the transceiver 608, for example, a system bus.

The foregoing components may be separately disposed on chips independent of each other, or at least some or all of the components may be disposed on a same chip. Whether the components are independently disposed on different chips or are integrated and disposed on one or more chips usually depends on a requirement of product design. A specific implementation form of the foregoing components is not limited in this embodiment of this application.

The traffic control apparatus 600 shown in FIG. 6 is merely an example. In an implementation process, the traffic control apparatus 600 may further include other components, which are not listed one by one in this specification. The traffic control apparatus 600 shown in FIG. 6 performs traffic control on a non-key service by performing all or some steps of the traffic control method provided in the foregoing embodiments.

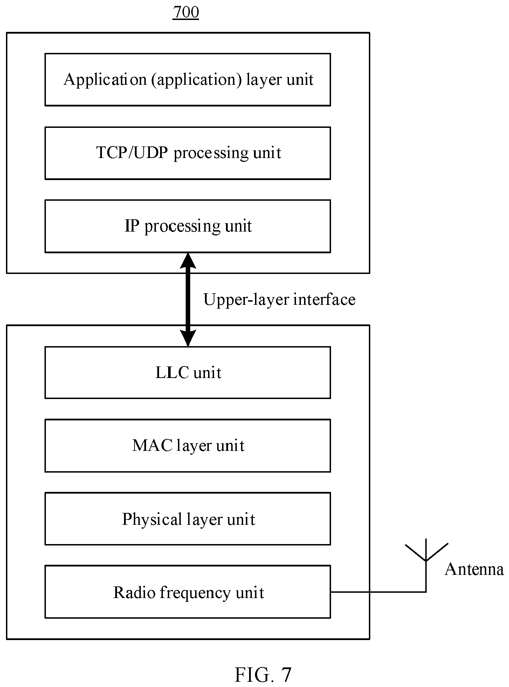

In another example, FIG. 7 is a schematic diagram of a structure of a traffic control apparatus 700 according to an embodiment of this application. FIG. 7 describes the structure of the traffic control apparatus 700 from a perspective of layers.

As shown in FIG. 7, the traffic control apparatus 700 includes a radio frequency unit, a PHY unit, a MAC layer unit, a logical link control (logical link control, LLC) unit, an Internet protocol (internet protocol, IP) processing unit, a transmission control protocol (transmission control protocol, TCP)/user datagram protocol (user datagram protocol, UDP) processing unit, and an application layer unit from bottom to top. The LLC unit communicates with the IP processing unit through an upper-layer interface. The IP processing unit, the TCP/UDP processing unit, and the application layer unit are also referred to as forwarding layer units.

The traffic control apparatus 700 further includes an antenna. The antenna is connected to the radio frequency unit. The radio frequency unit is configured to process a radio frequency signal received by the antenna. Therefore, in some embodiments, the radio frequency unit is also referred to as a radio (radio) unit.

Each of the radio frequency unit, the PHY unit, the MAC layer unit, and the LLC unit may be an independent chip. Alternatively, a plurality of the radio frequency unit, the PHY unit, the MAC layer unit, and the LLC unit may be integrated on a same chip. In this way, each unit may be a part of a processing circuit in the chip. The IP processing unit, the TCP/UDP processing unit, and the application layer unit may be software modules, or may be processing circuits in a processing chip.

The traffic control method provided in this embodiment of this application may be jointly performed by the radio frequency unit, the MAC layer unit, the TCP/UDP processing unit, and the like. For example, in the foregoing method embodiments, a related step of collecting statistics on the QoS of the key service may be performed by the MAC layer unit. Related steps of receiving the TCP packet may be performed by the TCP/UDP processing unit. Related steps of sending the downlink frame may be performed by the radio frequency unit in cooperation with the antenna. Related steps of performing traffic control on the non-key service may be performed by the MAC layer unit and the TCP/UDP processing unit in cooperation. The PHY unit, the LLC unit, the IP processing unit, the application layer unit, and the like may cooperate with the radio frequency unit, the MAC layer unit, and the TCP/UDP processing unit to perform the traffic control method in embodiments of this application.

An embodiment of this application provides a traffic control system, including an access point and a target station associated with the access point. The access point includes the traffic control apparatus shown in any one of FIG. 5 to FIG. 7.

Optionally, the traffic control system includes at least two access points, the at least two access points are neighbors to each other, operating channels of the at least two access points overlap, and any one of the at least two access points may indicate the other access point to perform traffic control on a non-key service.

Optionally, the at least two access points include a first access point and a second access point, and that operating channels of the at least two access points overlap includes: At least one sub-channel of the operating channel of the first access point is the same as at least one sub-channel of the operating channel of the second access point. For example, the operating channel of the first access point is completely the same as the operating channel of the second access point, or a part of the operating channel of the first access point is the same as a part of the operating channel of the second access point.

Optionally, the at least two access points include a first access point and a second access point, and that the at least two access points are neighbors to each other includes: A distance between the first access point and the second access point is less than a distance threshold.

Optionally, the traffic control system is the communications system shown in FIG. 1.

An embodiment of this application provides a computer-readable storage medium. The computer-readable storage medium stores a computer program. When the computer program is executed (for example, executed by an AP or one or more processors), all or some of the steps of the traffic control method provided in the foregoing method embodiments are implemented.

An embodiment of this application provides a computer program product. The computer program product includes a program or code. When the program or the code is executed (for example, executed by an AP or one or more processors), all or some of the steps of the traffic control method provided in the foregoing method embodiments are implemented.

An embodiment of this application provides a chip, including a programmable logic circuit and/or program instructions. When the chip is running, the chip is configured to implement all or some steps of the traffic control method provided in the foregoing method embodiments.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage apparatus, for example, a server or a data center, integrating one or more usable media. The usable medium may be a magnetic medium (for example, a floppy disk, a hard disk, or a magnetic tape), an optical medium, a semiconductor medium (for example, a solid state drive), or the like.

In this application, the term "at least one" means one or more, and "a plurality of' means two or more. The term "at least two" means two or more. In this application, unless otherwise specified, the symbol "/" generally means "or". For example, A/B may represent A or B. The term "and/or" in this specification describes only an association relationship for describing associated objects and represents that three relationships may exist. For example, A and/or B may represent the following three cases: only A exists, both A and B exist, and only B exists. In addition, for ease of clear description, in this application, words such as "first", "second", and "third" are used to distinguish between same items or similar items that have basically the same functions and functions. A person skilled in the art may understand that terms such as "first", "second", and "third" do not limit a quantity and an execution sequence.

Mutual reference may be made to different types of embodiments such as the method embodiments and the apparatus embodiments provided in embodiments of this application. This is not limited in embodiments of this application. A sequence of operations in the method embodiments provided in embodiments of this application can be properly adjusted, and operations can be added or deleted based on a situation. Any variation readily figured out by a person skilled in the art within the technical scope disclosed in this application shall fall within the protection scope of this application. Therefore, details are not described.

In the corresponding embodiments provided in this application, it should be understood that the disclosed apparatus and the like may be implemented in other composition manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts described as units may or may not be physical units, may be located in one position, or may be distributed on a plurality of network devices (for example, terminal devices). Some or all of the units may be selected based on actual needs to achieve the objectives of the solutions of embodiments.

The foregoing descriptions are merely examples of implementations of this application, but are not intended to limit the protection scope of this application. Any person skilled in the art may easily figure out various equivalent modifications or replacements within the technical scope disclosed in this application, and these modifications or replacements shall fall within the protection scope of this application. Therefore, the protection scope of this application shall be subject to the protection scope of the claims.

## Claims

1. A traffic control method, wherein the method comprises:
receiving, by an access point, a first transmission control protocol, TCP, packet sent to a target station, wherein the first TCP packet belongs to a non-key service, and the target station is associated with the access point;
decreasing, by the access point, a value of a receive window, RWND, field in the first TCP packet, to obtain a modified first TCP packet; and
sending, by the access point, a first downlink frame to the target station, wherein the first downlink frame comprises the modified first TCP packet.

2. The method according to claim 1, wherein
the first TCP packet is a TCP acknowledgment, ACK, packet.

3. The method according to claim 1 or 2, wherein
the decreasing, by the access point, a value of an RWND field in the first TCP packet comprises: decreasing, by the access point, the value of the RWND field in the first TCP packet when traffic of the non-key service needs to be decreased.

4. The method according to claim 3, wherein
the decreasing, by the access point, the value of the RWND field in the first TCP packet when traffic of the non-key service needs to be decreased comprises: when utilization of an operating channel of the access point is greater than a target threshold and a key service of the access point is affected, decreasing, by the access point, the value of the RWND field in the first TCP packet.

5. The method according to claim 3, wherein
the decreasing, by the access point, the value of the RWND field in the first TCP packet when traffic of the non-key service needs to be decreased comprises: when the access point receives an indication used to perform traffic control on the non-key service, decreasing, by the access point, the value of the RWND field in the first TCP packet.

6. The method according to claim 5, wherein
the indication used to perform traffic control on the non-key service is from an intra-frequency neighboring access point of the access point.

7. The method according to any one of claims 1 to 6, wherein the method further comprises:
receiving, by the access point, a second TCP packet sent to the target station, wherein the second TCP packet belongs to the non-key service;
when a received throughput of the access point for the non-key service is less than a target throughput, decreasing, by the access point, a value of an RWND field in the second TCP packet to obtain a modified second TCP packet, wherein a value of an RWND field in the modified second TCP packet is less than the value of the RWND field in the second TCP packet before modification and greater than a value of an RWND field in the modified first TCP packet; and
sending, by the access point, a second downlink frame to the target station, wherein the second downlink frame comprises the modified second TCP packet.

8. The method according to any one of claims 1 to 6, wherein the method further comprises:
receiving, by the access point, a third TCP packet sent to the target station, wherein the third TCP packet belongs to the non-key service;
when a received throughput of the access point for the non-key service is greater than a target throughput, decreasing, by the access point, a value of an RWND field in the third TCP packet to obtain a modified third TCP packet, wherein a value of an RWND field in the modified third TCP packet is less than the value of the RWND field in the third TCP packet before modification and less than a value of an RWND field in the modified first TCP packet; and
sending, by the access point, a third downlink frame to the target station, wherein the third downlink frame comprises the modified third TCP packet.

9. The method according to any one of claims 1 to 8, wherein
the traffic of the non-key service is greater than the target threshold.

10. A traffic control apparatus, applied to an access point, wherein the apparatus comprises:
a receiving module, configured to receive a first transmission control protocol, TCP, packet sent to a target station, wherein the first TCP packet belongs to a non-key service, and the target station is associated with the access point;
a processing module, configured to decrease a value of a receive window, RWND, field in the first TCP packet, to obtain a modified first TCP packet; and
a sending module, configured to send a first downlink frame to the target station, wherein the first downlink frame comprises the modified first TCP packet.

11. The apparatus according to claim 10, wherein
the processing module is configured to: when traffic of the non-key service needs to be decreased, decrease the value of the RWND field in the first TCP packet.

12. The apparatus according to claim 11, wherein
the processing module is configured to: when utilization of an operating channel of the access point is greater than a target threshold and a key service of the access point is affected, decrease the value of the RWND field in the first TCP packet.

13. The apparatus according to claim 11, wherein
the processing module is configured to: when the access point receives an indication used to perform traffic control on the non-key service, decrease the value of the RWND field in the first TCP packet.

14. The apparatus according to claim 13, wherein
the indication used to perform traffic control on the non-key service is from an intra-frequency neighboring access point of the access point.

15. The apparatus according to any one of claims 10 to 14, wherein
the receiving module is further configured to receive a second TCP packet sent to the target station, wherein the second TCP packet belongs to the non-key service;
the processing module is further configured to: when a received throughput of the access point for the non-key service is less than a target throughput, decrease a value of an RWND field in the second TCP packet to obtain a modified second TCP packet, wherein a value of an RWND field in the modified second TCP packet is less than the value of the RWND field in the second TCP packet before modification and greater than a value of an RWND field in the modified first TCP packet; and
the sending module is further configured to send a second downlink frame to the target station, wherein the second downlink frame comprises the modified second TCP packet.

16. The apparatus according to any one of claims 10 to 14, wherein
the receiving module is further configured to receive a third TCP packet sent to the target station, wherein the third TCP packet belongs to the non-key service;
the processing module is further configured to: when a received throughput of the access point for the non-key service is greater than a target throughput, decrease a value of an RWND field in the third TCP packet to obtain a modified third TCP packet, wherein a value of an RWND field in the modified third TCP packet is less than the value of the RWND field in the third TCP packet before modification and less than a value of an RWND field in the modified first TCP packet; and
the sending module is further configured to send a third downlink frame to the target station, wherein the third downlink frame comprises the modified third TCP packet.
